# EUROPÄISCHE PATENTSCHRIFT

(11) **EP 0 991 788 B1**
(45) Veröffentlichungstag und Bekanntmachung des Hinweises auf die Patenterteilung: **29.08.2001**
(21) Anmeldenummer: 98929384.0
(22) Anmeldetag: 27.05.1998
(51) Int. Cl.: C22C 19/05

(54) **NICKEL-CHROM-MOLYBDÄN-LEGIERUNG**
NICKEL-CHROMIUM-MOLYBDENUM ALLOY
ALLIAGE NICKEL-CHROME-MOLYBDENE

(30) Priorität: 05.06.1997 DE 19723491
(43) Veröffentlichungstag der Anmeldung: 12.04.2000
(73) Patentinhaber: Krupp VDM GmbH, 58791 Werdohl (DE)
(72) Erfinder: HEUBNER, Ulrich, D-58791 Werdohl (DE); KÖHLER, Michael, D-58638 Iserlohn (DE)
(86) Internationale Anmeldenummer: EP9803117
(87) Internationale Veröffentlichungsnummer: WO9855661

(56) Entgegenhaltungen:
- EP-A- 0 558 915
- DE-A- 19 536 978
- PATENT ABSTRACTS OF JAPAN vol. 096, no. 004, 30.April 1996 & JP 07 316699 A (MITSUBISHI MATERIALS CORP), 5.Dezember 1995,
- ALTPETER, E. ET AL.: "Evaluation of different metal alloys for waste water treatment of flue gas desulphurization plants. Erprobung verschiedener metallischer Legierungen für die Abwasseraufbereitung hinter Rauchgasentschwefelungsanlagen." WERKSTOFFE UND KORROSION, CONFERENCE: ACHEMA '94, Bd. 45, Nr. 10, 5. - 11.Juni 1994, DE, Seiten 539-549, XP002075970
- HEUBNER, U. ET AL.: "A new high alloyed nickel-chromium-molybdenum steel for the chemical process industry" WERKST. KORROS. , Bd. 40, Nr. 7, Juli 1989, DE, Seiten 418-426, XP002075971

## Beschreibung

Die Erfindung betrifft eine austenitische Nickel-Chrom-Molybdän-Legierung mit hoher Korrosionsbeständigkeit gegenüber oxidierenden und reduzierenden Medien.

Austenitische Nickellegierungen, die eine ausgezeichnete Beständigkeit gegenüber reduzierenden Medien wie z. B. Salzsäure aufweisen, sind in der Regel mit 26 bis 30 % Molybdän legiert. Bekannte Nickel-Molybdän-Legierungen sind beispielsweise Alloy B-2 (2.4617) und Alloy B-4 (2.4600). Diese Werkstoffe sind bis zum Siedepunkt gegenüber Salzsäure beständig, solange nicht Spuren von oxidierenden Bestandteilen wie z. B. Fe³⁺ in der Säure vorhanden sind. Solche Spuren können während des Transportes der Säure jedoch als Verunreinigung leicht eingeschleppt werden. In gleicher Weise erhöht die Anwesenheit von Spuren von HNO₃ die Korrosionsgeschwindigkeit der Nickel-Molybdän-Legierungen stark. Deswegen hat es nicht an Versuchen gefehlt, die quasi binären Nickel-Molybdän-Legierungen durch eine Modifikation der Zusammensetzung gegenüber oxidierenden Verunreinigungen unempfindlicher zu machen.

Durch die EP 0 723 029 A1 ist beispielsweise eine Nickel-Molybdän-Chrom-Eisen-Legierung bekannt geworden, die gegenüber sauren, sauerstoffarmen Medien eine herausragende Korrosionsbeständigkeit besitzt. Erreicht wurde dies dadurch, daß der Molybdängehalt auf im Mittel 23 % zurückgenommen und im Gegenzug der Werkstoff mit im Mittel rd. 8 % Chrom legiert wurde.

Auf der anderen Seite sind korrosionsbeständige Nickellegierungen mit Chrom und Molybdän als Hauptlegierungsbestandteile bekannt, welche 14 bis 26 % Chrom und 3 bis 18 % Molybdän oder 20 bis 24 % Chrom, 12 bis 17 % Molybdän, 2 bis 4 % Wolfram und 2 bis 8 % Eisen enthalten.

Gemäß EP 0 334 410 B1 ist eine Legierung mit 22 bis 24 % Chrom und 15 bis 16,5 % Molybdän vorteilhaft für die Arbeitsbedingungen der chemischen Verfahrenstechnik und Umweltschutztechnik einsetzbar. Diese Werkstoffe besitzen nach aktueller Zusammensetzung eine gute Beständigkeit gegenüber abtragender Korrosion sowie gegen Loch- und Spaltkorrosion. Infolge ihres hohen Chromgehalts ist ihre Beständigkeit unter reduzierenden Bedingungen jedoch nicht so gut wie in oxidierenden Medien. Man hat versucht, diesem Mangel abzuhelfen, indem zu einer Legierung mit etwa 19 bis 23 % Chrom und etwa 14 bis 17 % Molybdän noch etwa 2 bis 4 % Wolfram zulegiert werden.

Nachteil einer derartigen Legierungszusammensetzung ist jedoch, daß sie die Erfordernis einer speziellen Homogenisierungs-Glühbehandlung einschließt, wie in der europäischen Patentanmeldung EP 0 392 484 A1 im einzelnen erläutert ist. Außerdem besitzt diese Legierung eine geringe thermische Stabilität, was nachteilig für ihre Verarbeitung, beispielsweise durch Schweissen ist. Dies wird deutlich anhand der nachfolgend dargestellten Ergebnisse, welche als Korrosionsabtrag in mm/Jahr im Standard-Test auf Interkristalline Korrosion gemäß ASTM G 28 A erhalten wurden, wobei eine typische Legierungszusammensetzung gemäß EP 0 392 484 A1 einmal im lösungsgeglühten und einmal im 1 h bei 870 °C thermisch beanspruchten Zustand geprüft wurde. Als Korrosionsabtrag ergaben sich in dem einem Fall 2,63 und im anderen Fall 22,14 mm/Jahr. Man erkennt die geringe Stabilität gegenüber thermischer Beanspruchung hier daran, daß die 1-stündige Alterung bei 870 °C den Korrosionsabtrag im Standard-Test gemäß ASTM G-28 A im Fall der Legierung gemäß EP 0 392 484 A1 um mehr als das 8fache ansteigen läßt.

Alternativ wird mit der europäischen Patentanmeldung EP 0 693 565 A2 eine Nickel-Chrom-Molybdän-Legierung vorgeschlagen, welcher neben 22,0 bis 24,5 % Chrom und 14,0 bis 18,0 % Molybdän u.a. auch noch 1,0 bis 3,5 % Kupfer zulegiert ist. Dieser Kombination kann noch Stickstoff in Anteilen bis zu 0,15 % als festigkeitssteigerndes Element zugegeben werden, vorzugsweise aber nicht mehr als 0,06 %, weil Stickstoff in dieser Legierungskombination mit Kupfer gemäß der Lehre von EP 0 693 565 A2 der Korrosionsbeständigkeit in dem typischen reduzierenden Medium Salzsäure abträglich ist. Im übrigen führt der Zusatz von Kupfer auch zu einer herabgesetzten thermischen Stabilität, was nachteilig für ihre Verarbeitung, beispielsweise durch Schweissen ist. Dies wird deutlich anhand der dargestellten Ergebnisse, welche wiederum als Korrosionsabtrag in mm/Jahr im Standard-Test auf Interkristalline Korrosion gemäß ASTM G-28 A erhalten wurden, wobei eine typische Legierungszusammensetzung gemäß EP 0 693 565 A2 einmal im lösungsgeglühten und einmal im 1 h bei 870 °C gealterten Zustand geprüft wurde. Als Korrosionsabtrag ergaben sich in dem einen Fall 0,68 und im anderen Fall 2,90 mm/Jahr.

Man erkennt die geringe thermische Stabilität hier daran, daß eine einstündige Alterung bei 870 °C den Korrosionsabtrag um mehr als das 4fache ansteigen läßt. Die geringe thermische Stabilität dieser Legierung kommt noch ausgeprägter zum Ausdruck, wenn sie einmal im lösungsgeglühten Zustand und einmal im 1 h bei 870 °C gealterten Zustand in dem alternativen Standard-Test auf Interkristalline Korrosion gemäß ASTM G-28 B geprüft wird. Dabei wurden dann Korrosionsabträge von 0,11 und von 57,8 mm/Jahr ermittelt, also mehr um das 500fache erhöht durch die einstündige Alterung, wobei im gealterten Zustand der Angriff längs der Korngrenzen so stark war, daß im Test ganze Körner aus dem Material herausfielen.

Weiterhin ist eine Nickel-Chrom-Molybdän-Legierung mit 20 % Chrom, 20 % Molybdän und 2 % Tantal für die Anwendung als Wärmetauscherrohr zur Wärmerückgewinnung aus den Rauchgasen fossil befeuerter Kraftwerke bekanntgeworden. Diese Legierung soll gemäß CORROSION 96, Paper No 413 besonders geeignet sein, der dort auftretenden Taupunktkorrosion der Schwefelsäure zu widerstehen. Ihre thermische Stabilität ist aufgrund der Legierungszusammensetzung jedoch nicht besser als die der vorgenannten beiden Legierungen gemäß EP 0 392 484 A1 und EP 0 693 565 A2 einzuschätzen.

Es besteht deshalb die Aufgabe, eine Nickel-Chrom-Molybdän-Legierung vorzuschlagen, welche eine ausgewogene und hierin dem Stand der Technik überlegene Korrosionsbeständigkeit in einer Vielzahl von sowohl oxidierenden als auch reduzierenden Medien aufweist, ohne den Nachteil einerseits einer speziellen Homogenisierungs-Glühbehandlung und andererseits ohne die Nachteile einer geringen thermischen Stabilität zu bedürfen.

Diese Aufgabe wird erfindungsgemäß gelöst mit einer Nickel-Chrom-Molybdän-Legierung der folgenden Zusammensetzung (Masse-%):

| | |
|---|---|
| Chrom | 20,0 bis 23,0 % |
| Molybdän | 18,5 bis 21,0 % |
| Eisen | max. 1,5 % |
| Mangan | max. 0,5 % |
| Silizium | max. 0,10 % |
| Kobalt | max. 0,3 % |
| Wolfram | max. 0,3 % |
| Kupfer | max. 0,3 % |
| Aluminium | 0,1 bis 0,3 % |
| Magnesium | 0,001 bis 0,015 % |
| Kalzium | 0,001 bis 0,010 % |
| Kohlenstoff | max. 0,01 % |
| Stickstoff | 0,05 bis 0,15 % |
| Vanadium | 0,1 bis 0,3 % |

Rest Nickel und weitere erschmelzungsbedingte Verunreinigungen.

Eine bevorzugte Nickel-Chrom-Molybdän-Legierung beinhaltet folgende Zusammensetzung (Masse-%):

| | |
|---|---|
| Chrom | 20,5 bis 21,5 % |
| Molybdän | 19,5 bis 20,5 % |
| Eisen | max. 1,5 % |
| Mangan | max. 0,5 % |
| Silizium | max. 0,10 % |
| Kobalt | max. 0,3 % |
| Wolfram | max. 0,3 % |
| Kupfer | max. 0,3 % |
| Aluminium | 0,1 bis 0,3 % |
| Magnesium | 0,001 bis 0,015 % |
| Kalzium | 0,001 bis 0,010 % |
| Kohlenstoff | max. 0,01 % |
| Stickstoff | 0,08 bis 0,12 % |

Rest Nickel und weitere erschmelzungsbedingte Verunreinigungen.

Einem weiteren Gedanken der Erfindung gemäß können herstellungsbedingt noch nachstehende Beimengungen (in Masse-%) der einen bzw. der anderen Nickel-Chrom-Molybdän-Legierungen zulegiert werden:

| | |
|---|---|
| Bor | max. 0,0030 % |
| Phosphor | max. 0,020 % |
| Schwefel | max. 0,010 % |
| Niob | max. 0,20 % |
| Titan | max. 0,02 %, die auf kosten des Nickel-Anteils zugegeben werden. |

Ein bevorzugtes Anwendungsgebiet des Erfindungsgegenstandes ist darin zu sehen, daß die Nickel-Chrom-Molybdän-Legierung für Bauteile in Chemieanlagen zum Einsatz gelangt, die gleichzeitig eine hohe Beständigkeit gegenüber oxidierenden und reduzierenden Medien aufweisen müssen.
Ebenfalls denkbar ist die Verwendung dieser erfindungsgemäßen Legierung als Schweißzusatz zum überlegierten Verschweißen hochlegierter NiCrMo-Werkstoffe bzw. als artgleicher seigerungsarmer Schweißzusatz mit sich selbst.

Besonders universell einsetzbar ist eine Legierung, die ein Chrom-Molybdän-Verhältnis zwischen 1,9 und 2,3 - gerechnet im Stoffmengengehalt auf Basis von Atom-% - aufweist, wobei vorzugsweise ein Verhältnis von etwa 2,0 als Optimum angesehen wird.

Überraschenderweise hat sich gezeigt, daß es bei dieser Legierungszusammensetzung von im Mittel beispielsweise etwa 21 % Chrom und 20 % Molybdän möglich ist, mit dem Zulegieren von 0,1 % Stickstoff den Austenitbereich des hier näherungsweise vorliegenden Dreistoffsystems Nickel-Chrom-Molybdän einerseits so aufzuweiten, daß der Werkstoff keiner speziellen Homogenisierungs-Glühbehandlung bedarf, andererseits aber die Korrosionsbeständigkeit in reduzierenden Medien wie beispielsweise Salzsäure nicht beeinträchtigt ist, wie man nach dem vorbeschriebenen Stand der Technik auch hier hätte erwarten müssen.

Anhand von Beispielen wird die Erfindung im Vergleich zu den gemäß dem Stand der Technik bekannten Nickellegierungen nachfolgend erläutert.

Tabelle 1 zeigt unter der Bezeichnung 1, 2 und 3 Ausführungsbeispiele für die erfindungsgemäße Legierung. Diese drei Ausführungsbeispiele wurden in üblicher Weise im Induktionsofen erschmolzen und sind unter Einhaltung des Standardfertigungswegs für Nickelbasiswerkstoffe an 5 und an 12 mm dicken Blechen verarbeitet worden. Wie man in Tabelle 1 erkennt liegen die dem Stand der Technik entsprechenden Vergleichswerkstoffe im Stickstoffgehalt alle deutlich unter 0,04 %.

In Tabelle 2 sind die Prüfergebnisse der 3 Ausführungsbeispiele der erfindungsgemäßen Legierung sowie der Vergleichswerkstoffe für zwei unterschiedlich stark oxidierende Prüflösungen (ASTM G 28A und B) sowie zwei reduzierende Prüfmedien (SEP 1877 III und DuPont SW 800 M) dargestellt. Erwartungsgemäß sind die hoch Mohaltigen Varianten Alloy B-2/B-4 und B-10 unter diesen oxidierenden Bedingungen nicht korrosionsbeständig. Auch in der schwächer oxidierend wirkenden Lösung des ASTM G 28 B Tests zeigen diese Werkstoffe noch starken IK-Angriff und lösen sich aktiv auf. Die Ausführungsbeispiele der erfindungsgemäßen Legierung dagegen zeichnen sich sowohl in den oxidierenden als auch in den reduzierenden Medien durch IK-Beständigkeit aus und weisen für beide Medienbereiche insgesamt die geringsten Massenverlustraten auf. Das Ausführungsbeispiel 2 der erfindungsgemäßen Legierung, welches in ihrem Cr/Mo-Verhältnis leicht unter 2 liegt, zeichnet sich bei dieser Betrachtung durch besonders niedrige Korrosionsgeschwindigkeiten aus.

Das wird in Tabelle 3 verdeutlicht, die sich mit Ergebnissen der Prüfung der Ausführungsbeispiele der erfindungsgemäßen Legierung und der Vergleichswerkstoffe als Summenwerte des gemessenen Korrosionsabtrages in den Prüfungen sowohl unter oxidierenden als auch unter reduzierenden Bedingungen gemäß Tabelle 2 auseinandersetzt. Legierung 1 mit 18,6 % Molybdän liegt knapp oberhalb des erfindungsgemäßen Wertes, weist jedoch bereits Eigenschaften auf, die besser sind, als der bekannte Stand der Technik gemäß Legierung C-2000. Somit kann eine solche Legierung für bestimmte Anwendungsfälle bereits zweckmäßigerweise zum Einsatz gelangen.

Wie aus Tabelle 4 zu entnehmen ist, wurde in einem weiteren Versuchsabschnitt das Verhalten der Werkstoffe in 2 %iger siedender Salzsäure ermittelt. Die Korrosionsgeschwindigkeit der drei Ausführungsbeispiele der erfindungsgemäßen Legierung liegt unter diesen Bedingungen auf dem Niveau, wie es für die Werkstoffgruppe **Nickel-Molybdän**-Legierungen, der sogenannten B-Legierungen gefunden wird und deutlich unterhalb der anderen dem Stand der Technik entsprechenden Vergleichswerkstoffe. Auch für die Legierung NiCr20Mo20Ta (Corrosion 96, Paper No. 413) wird ein höherer Wert angegeben.

Ein Prüfmedium, welches eine Mittelposition zwischen oxidierenden und reduzierenden Bedingungen einnimmt, stellt die Prüfung in 90 %iger Schwefelsäure dar. Wie anhand von Tabelle 5 aufgezeigt wird, verhalten sich unter diesen Bedingungen die Ausführungsbeispiele 1 bis 3 der erfindungsgemäßen Legierung ausgesprochen korrosionsbeständig. Insbesondere die Legierungsvariante Nr. 2, die das Cr/Mo-Verhältnis von leicht unter 2 aufweist, weist eine Korrosionsbeständigkeit auf, die auf dem Niveau der B-Legierungen liegt.

Die ausgezeichnete Lokalkorrosionsbeständigkeit der Ausführungsbeispiele 1 bis 3 der erfindungsgemäßen Legierung in sauren chloridhaltigen Medien konnte durch die Prüfung im Medium "Grüner Tod" belegt werden. Gemäß Tabelle 6 weist der Werkstoff Alloy 59 entsprechend dem Stand der Technik eine ausgezeichnete Lokalkorrosionsbeständigkeit auf. Im Prüfmedium "Grüner Tod" liegt die kritische Lochfraßtemperatur bei 125 °C. Demgegenüber konnte an Proben aus der erfindungsgemäßen Legierung unter diesen Prüfbedingungen Lochfraß bei 135 °C noch nicht festgestellt werden. Die Legierungen aus der Gruppe der B-Werkstoffe sind in diesem Prüfmedium nicht beständig. Die drei Ausführungsbeispiele der neuen erfindungsgemäßen Legierungen zeigen hier das beste Verhalten.

Trotz der hohen Legierungsanteile weisen die Versuchslegierungen eine Gefügestabilität auf, die den Vergleichswerkstoffen überlegen ist. Wie Tabelle 7 erläutert, wurden Proben über 1 h und 3 h bei 870 °C sensibilisiert und anschließend einer Prüfung gemäß ASTM G 28 B unterzogen. Die Vergleichswerkstoffe C-276, C-22, 686 und C-2000 zeigen nach der thermischen Beanspruchung nicht nur einen starken Anstieg der Korrosionsgeschwindigkeit, sondern wiesen auch interkristalline Korrosion in solchem Ausmaß auf, daß einzelne Körner herausfielen. Die erfindungsgemäßen Werkstoffe dagegen waren frei von jeglichen Lokalkorrosionserscheinungen und zeichneten sich durch eine besonders niedrige Massenverlustrate aus. Nur die Legierung 59 zeigt in diesem Test zwar ein besseres Verhalten, ist jedoch unter den Versuchsbedingungen "Grüner Tod" (Tabelle 6) sowie in 90 %iger Schwefelsäure (Tabelle 5) und in 2 %iger Salzsäure (Tabelle 4) sowie in der Zusammenschau gemäß Tabelle 3 weniger korrosionsbeständig.

Tabelle 8 faßt die Ergebnisse der Prüfung der mechanischen Eigenschaften der drei Ausführungsbeispiele der erfindungsgemäßen Legierung zusammen und stellt sie typischen Werten der Vergleichswerkstoffe für den gleichen Abmessungsbereich gegenüber.

Man erkennt, daß die mechanischen Eigenschaften im Vergleich zu den zum Stand der Technik gehörenden Legierungen nicht nachteilig beeinflußt sind.

Tabelle 9 zeigt eine Gegenüberstellung des oberen sowie des unteren Grenzwertes einerseits von Chrom und andererseits von Molybdän. Die Angaben sind jeweils in Masse-% sowie in Atom-% angegeben. Auf Basis der unteren und oberen in Anspruch 1 angegebenen Grenzwerte ergibt sich das Verhältnis Cr/Mo (berechnet auf Atom-%) zwischen 1,99 und 2,02.

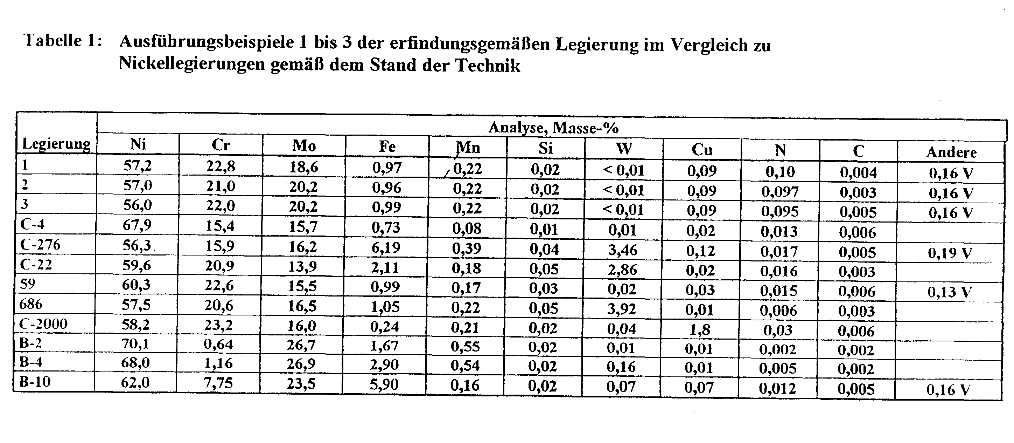

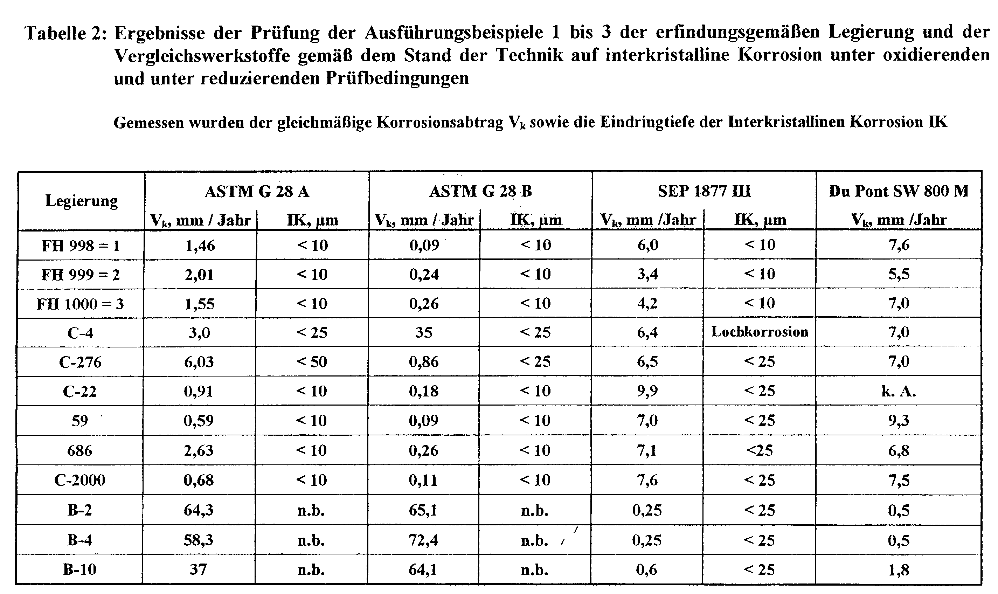

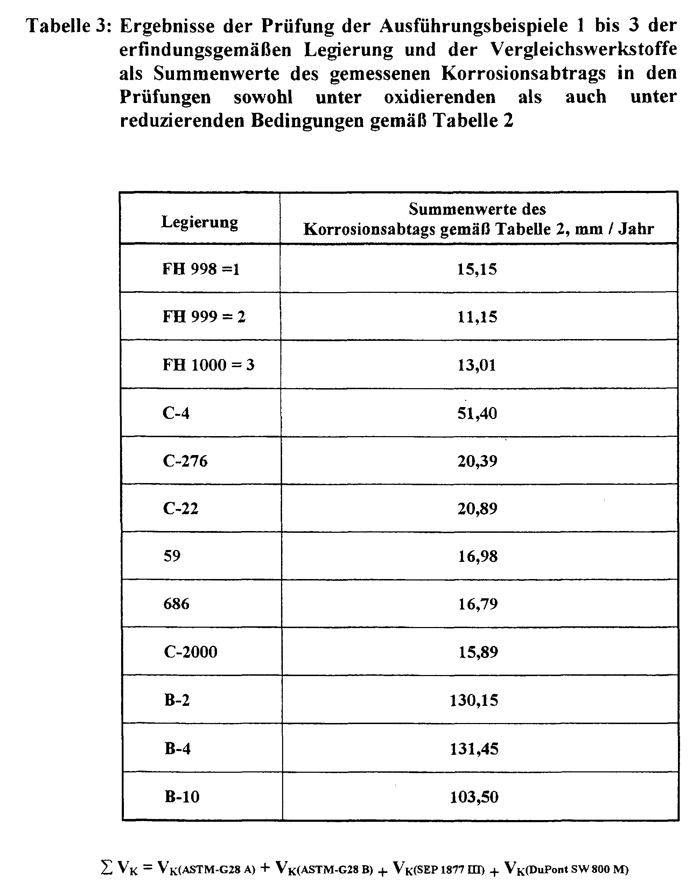

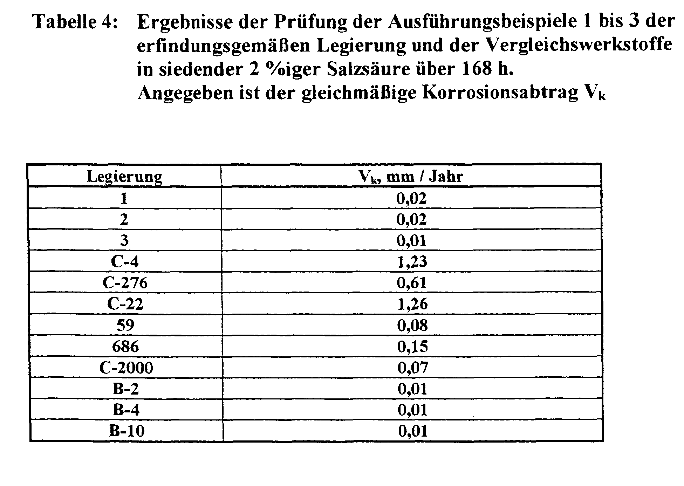

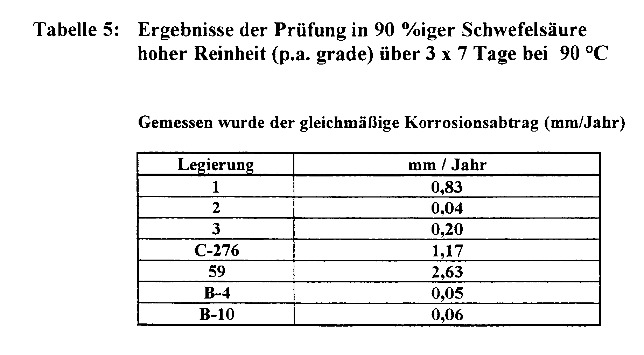

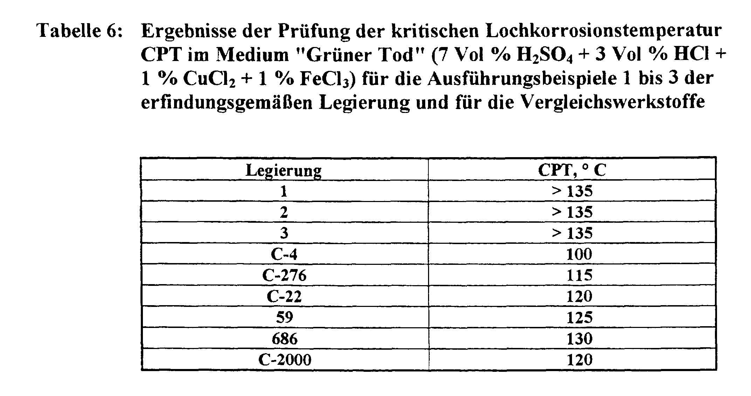

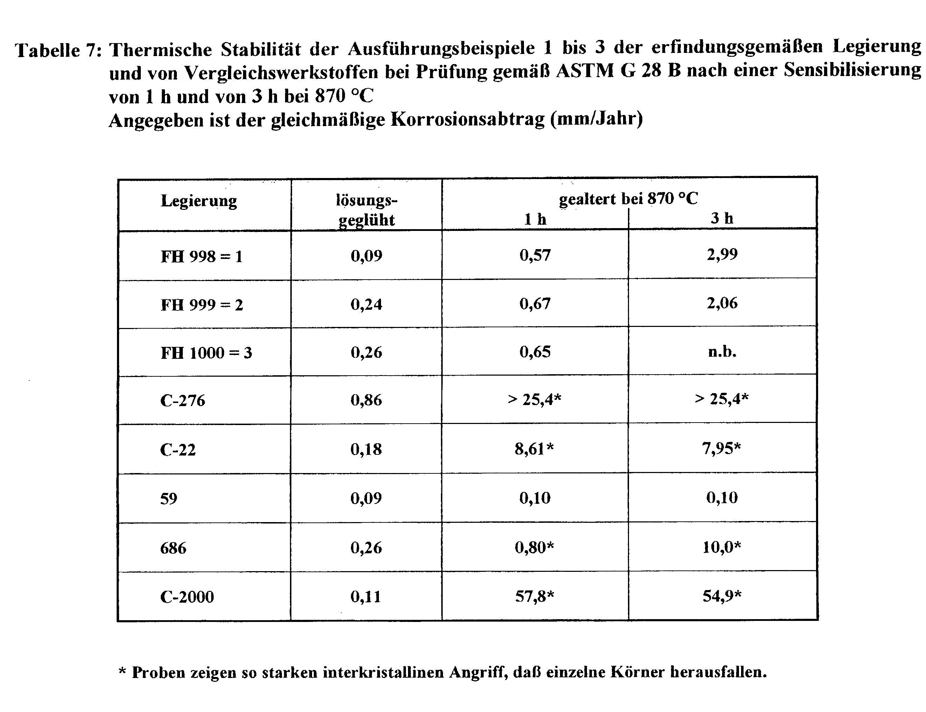

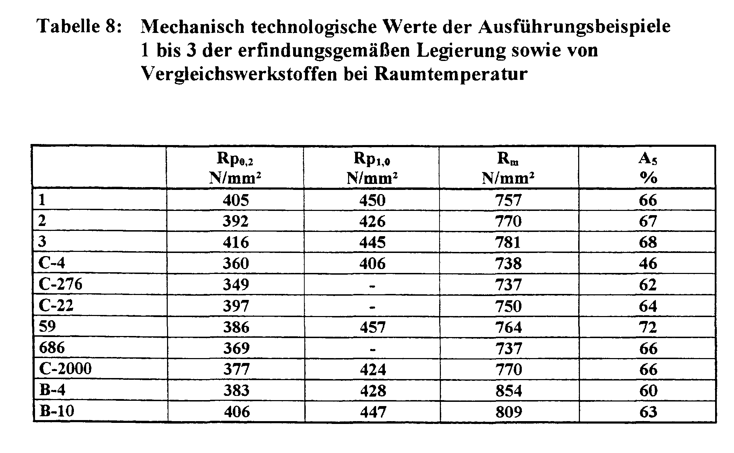

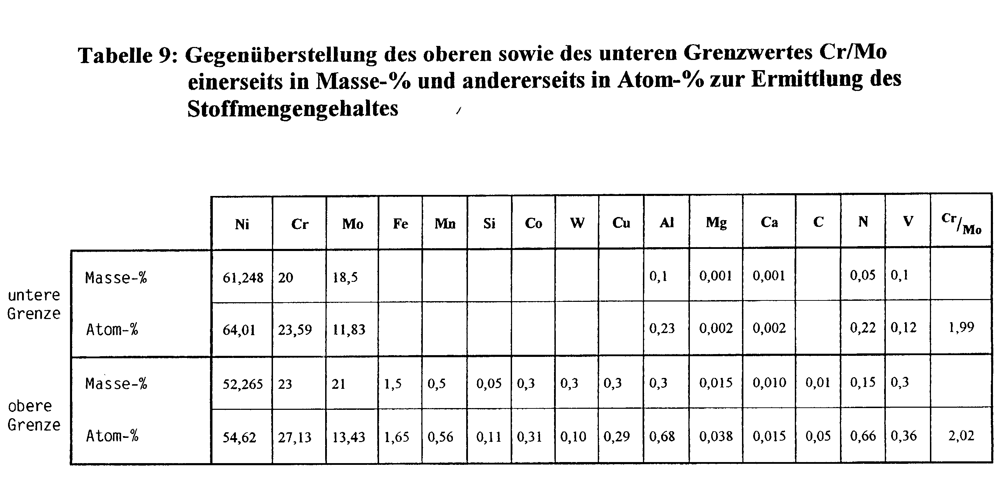

## Patentansprüche

1. Austenitische Nickel-Chrom-Molybdän-Legierung mit hoher Korrosionsbeständigkeit gegenüber oxidierenden und reduzierenden Medien bestehend aus folgender Zusammensetzung (in Masse%):
| | |
|---|---|
| Chrom | 20,0 bis 23,0 % |
| Molybdän | 18,5 bis 21,0 % |
| Eisen | max. 1,5 % |
| Mangan | max. 0,5 % |
| Silizium | max. 0,10 % |
| Kobalt | max. 0,3 % |
| Wolfram | max. 0,3 % |
| Kupfer | max. 0,3 % |
| Aluminium | 0,1 bis 0,3 % |
| Magnesium | 0,001 bis 0,015 % |
| Kalzium | 0,001 bis 0,010 % |
| Kohlenstoff | max. 0,01 % |
| Stickstoff | 0,05 bis 0,15 % |
| Vanadium | 0,1 bis 0,3 % |
Rest Nickel und weitere erschmelzungsbedingte Verunreinigungen.

2. Nickel-Chrom-Molybdän-Legierung nach Anspruch 1,
gekennzeichnet durch folgenden Zusammensetzung (in Masse-%):
| | |
|---|---|
| Chrom | 20,5 bis 21,5 % |
| Molybdän | 19,5 bis 20,5 % |
| Eisen | max. 1,5 % |
| Mangan | max. 0,5 % W |
| Silizium | max. 0,10 % |
| Kobalt | max. 0,3 % |
| Wolfram | max. 0,3 % |
| Kupfer | max. 0,3 % |
| Aluminium | 0,1 bis 0,3 % |
| Magnesium | 0,001 bis 0,015 % |
| Kalzium | 0,001 bis 0,010 % |
| Kohlenstoff | max. 0,01 % |
| Stickstoff | 0,08 bis 0,12 % |
Rest Nickel und weitere erschmelzungsbedingte Verunreinigungen.

3. Nickel-Chrom-Molybdän-Legierung nach Anspruch 1 oder 2, gekennzeichnet durch folgende weitere Beimengungen (in Masse%) :
| | |
|---|---|
| Bor | max. 0,0030 % |
| Phosphor | max. 0,020 % |
| Schwefel | max. 0,010 % |
| Niob | max. 0,20% |
| Titan | max. 0,02 %, die auf kosten des Nickel-Anteils zugegeben werden. |

4. Nickellegierung nach einem der Ansprüche 1 bis 3, die ein Chrom- zu Molybdänverhältnis - berechnet auf Stoffmengengehalten (in Atom-%) - von 1,9 bis 2,3 aufweist.

5. Verwendung einer Nickellegierung nach einem der Ansprüche 1 bis 4 für Bauteile in Chemieanlagen.

6. Verwendung einer Nickellegierung nach einem der Ansprüche 1 bis 4 als Schweißzusatz zum überlegierten Verschweißen hochlegierter NiCrMo-Werkstoffe bzw. als artgleicher seigerungsarmer Schweißzusatz mit sich selbst.

## Claims

1. Austenitic nickel-chromium-molybdenum alloy with a high corrosion resistance to oxidizing and reducing media having the following composition (in % by mass):
| | |
|---|---|
| chromium | 20.0 to 23.0 % |
| molybdenum | 18.5 to 21.0 % |
| iron | max. 1.5 % |
| manganese | max. 0.5 % |
| silicium | max. 0.10 % |
| cobalt | max. 0.3 % |
| tungsten | max. 0.3 % |
| copper | max. 0.3 % |
| aluminium | 0.1 to 0.3 % |
| magnesium | 0.001 to 0.015 % |
| calcium | 0.001 to 0.010 % |
| carbon | max. 0.01 % |
| nitrogen | 0.05 to 0.15 % |
| vanadium | 0.1 to 0.3 % |
rest nickel and other impurities resulting from the steel production.

2. Nickel-chromium-molybdenum alloy according to claim 1, characterized by the following composition (in % by mass):
| | |
|---|---|
| chromium | 20.5 to 21.5 % |
| molybdenum | 19.5 to 20.5 % |
| iron | max. 1.5 % |
| manganese | max. 0.5 % |
| silicium | max. 0.10 % |
| cobalt | max. 0.3 % |
| tungsten | max. 0.3 % |
| copper | max. 0.3 % |
| aluminium | 0.1 to 0.3 % |
| magnesium | 0.001 to 0.015 % |
| calcium | 0.001 to 0.010 % |
| carbon | max. 0.01 % |
| nitrogen | 0.08 to 0.12 % |
rest nickel and other impurities resulting from the steel production.

3. Nickel-chromium-molybdenum alloy according to claim 1 or 2, characterized by the following further additions:
| | |
|---|---|
| boron | max. 0.0030 % |
| phosphorous | max. 0.020 % |
| sulphur | max. 0.010 % |
| niobium | max. 0.20 % |
| titanium | max. 0.02 %, |
which are added at the cost of the nickel portion.

4. Nickel alloy according to one of the claims 1 through 3, which has a chromiummolybdenum-ratio between 1.9 and 2.3 - calculated in amounts of substance (in atomic %).

5. Use of a nickel alloy according to the claims 1 through 4 for components of chemical installations.

6. Use of a nickel alloy according to one of the claims 1 through 4 as welding filler for the alloy welding of high alloy NiCrMo materials respectively as welding filler of the same kind and with little segregation with itself.

## Revendications

1. Alliage de nickel-chrome-molybdène ayant une haute résistance à la corrosion dans des milieux oxydants et réducteurs et constitué de la composition suivante (en % en poids):
| | |
|---|---|
| chrome | 20,0 à 23,0 % |
| molybdène | 18,5 à 21,0 % |
| fer | max. 1,5 % |
| manganèse | max. 0,5 % |
| silicium | max. 0,10 % |
| cobalt | max. 0,3 % |
| tungstène | max. 0,3 % |
| cuivre | max. 0,3 % |
| aluminium | 0,1 à 0,3 % |
| magnésium | 0,001 à 0,015 % |
| calcium | 0,001 à 0,010 % |
| carbone | max. 0,01 % |
| azote | 0,05 à 0,15 % |
| vanadium | 0,1 à 0,3 % |
le reste étant du nickel et d'autres impuretés résultant de l'élaboration.

2. Alliage de nickel-chrome-molybdène selon la revendication 1, caractérisé par la composition suivante (en % en poids):
| | |
|---|---|
| chrome | 20,5 à 21,5 % |
| molybdène | 19,5 à 20,5 % |
| fer | max. 1,5 % |
| manganèse | max. 0,5 % |
| silicium | max. 0,10 % |
| cobalt | max. 0,3 % |
| tungstène | max. 0,3 % |
| cuivre | max. 0,3 % |
| aluminium | 0,1 à 0,3 % |
| magnésium | 0,001 à 0,015 % |
| calcium | 0,001 à 0,010 % |
| carbone | max. 0,01 % |
| azote | 0,08 à 0,12 % |
le reste étant du nickel et d'autres impuretés résultant de l'élaboration.

3. Alliage de nickel-chrome-molybdène selon la revendication 1 ou 2, caractérisé par des autres additions suivantes (en % en poids):
| | |
|---|---|
| bore | max. 0,0030 % |
| phosphore | max. 0,020 % |
| soufre | max. 0,010 % |
| niobium | max. 0,20 % |
| titane | max. 0,02 %, |
qu'on ajoute au détriment de la portion de nickel.

4. Alliage de nickel selon l'une des revendications 1 à 3 qui présente un rapport de chrome à molybdène de 1,9 à 2,3 - calaculé en rapport de quantités de substance (en % atomique).

5. Utilisation d'un alliage de nickel selon l'une des revendications 1 à 4 pour des composants des installations chimiques.

6. Utilisation d'un alliage de nickel selon l'une des revendications 1 à 4 en tant que métal d'apport pour le soudage surallié des matériaux NiCrMo fortement alliés respectivement en tant que métal d'apport de même nature et peu ségrégé avec soi- même.
